(19)

Europäisches Patentamt
European Patent Office
Office européen des brevets

(11)  EP 4 535 059 A1

(12)  EUROPEAN PATENT APPLICATION
published in accordance with Art. 153(4) EPC

(43) Date of publication:
09.04.2025 Bulletin 2025/15

(21) Application number: 23811733.7

(22) Date of filing: 18.05.2023

(51) International Patent Classification (IPC):
$G02B\ 13/04$ (2006.01)    $G02B\ 13/00$ (2006.01)
$G02B\ 13/18$ (2006.01)

(52) Cooperative Patent Classification (CPC):
G02B 13/00; G02B 13/04; G02B 13/18

(86) International application number:
PCT/JP2023/018605

(87) International publication number:
WO 2023/228860 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  26.05.2022  JP 2022086269

(71) Applicant: Daicel Corporation
Osaka-shi, Osaka 530-0011 (JP)

(72) Inventor: MATSUNAGA, Shigehiko
Tokyo 108-8230 (JP)

(74) Representative: Müller-Boré & Partner
Patentanwälte PartG mbB
Friedenheimer Brücke 21
80639 München (DE)

(54)  **IMAGING LENS AND IMAGING DEVICE EQUIPPED WITH SAME**

(57)    An imaging lens includes a lens system in which a first lens having negative refractive power with a concave surface facing an image side, a second lens having positive refractive power with a convex surface facing an object side, a diaphragm, a third lens having positive refractive power, and a fourth lens having positive refractive power with a convex surface facing an image side are arranged in order from the object side. The lens system satisfies the following conditional expressions. $-3 < f1/f < -1.15 \cdots (1)$ $2.4 < TTL/ImgH < 5 \cdots (2)$ where f1 is the focal length of the first lens, f is the focal length of the lens system, TTL is the total length of the lens system, and ImgH is the maximum image height of the lens system.

FIG. 1

## Description

Technical Field

The present disclosure relates to an imaging lens and an imaging device equipped with the same.

Background Art

In recent years, as typified by the high performance of an imaging device mounted on a portable communication terminal such as a smartphone, an imaging lens having a smaller size and a high resolution is desired for an imaging device commonly mounted on an electronic device.

Recently, more electronic devices are mounted with a distance measurement sensor such as a time of flight (ToF) sensor. Such a distance measurement sensor measures the distance to a subject by using a time from when light is emitted from a light source to when reflected light reflected by the subject is received by a light receiving element. Such a distance measurement sensor is also a type of imaging device, and causes a light receiving element to receive reflected light through an imaging lens. An imaging lens used for a distance measurement sensor is desired to be an imaging lens having a small size, a small F-number, and a high resolution. Furthermore, in recent years, there has been an increasing demand for an imaging lens having a wide angle of view and a high peripheral light amount for capturing a wider range.

For example, Patent Documents 1 and 2 below disclose proposals for a four-lens imaging lens that is wide in angle and small in size.

Citation List

Patent Document

Patent Document 1: JP 4797115 A

Patent Document 2: JP 6047701 A

Summary of Invention

Technical Problem

The imaging lens described in Patent Document 1 proposes a compact lens system having a wide angle of view. However, since the diaphragm is disposed behind a third lens and the entrance pupil position gets close to an imaging surface side, it is difficult to reduce the front lens diameter. If the total length is shortened, the light ray angle after the diaphragm becomes steeper, and it is difficult to secure the peripheral light amount.

The imaging lens described in Patent Document 2 proposes a lens system having a wide angle of view and a high resolution. However, similarly to Patent Document 1, the diaphragm is disposed behind the third lens, and it is difficult to achieve both downsizing and securing the peripheral light amount. There remains a problem that the refractive power of the first lens is weak and it is difficult to downsize the front lens diameter.

The present disclosure has been made in view of the above problems, and an object of the present disclosure is to provide an imaging lens having a wide angle of view and a high peripheral light amount while having a small size and a high resolution, and an imaging device provided with the imaging lens.

Solution to Problem

An imaging lens according to one embodiment of the present disclosure includes a lens system in which a first lens having negative refractive power with a concave surface facing an image side, a second lens having positive refractive power with a convex surface facing an object side, a diaphragm, a third lens having positive refractive power, and a fourth lens having positive refractive power with a convex surface facing an image side are arranged in order from the object side. The lens system satisfies conditional expressions of:

$$-3 < f1/f < -1.15 \cdots (1)$$

$$2.4 < \mathrm{TTL/ImgH} < 5 \cdots (2)$$

where f1 is a focal length of the first lens, f is a focal length of the lens system, TTL is a total length of the lens system, and ImgH is a maximum image height.

An imaging device according to another aspect of the present disclosure includes an imaging lens having the above configuration.

Advantageous Effects of Invention

According to the present disclosure, it is possible to provide an imaging lens having a wide angle of view and a high peripheral light amount while having a small size and a high resolution, and an imaging device provided with the imaging lens.

Brief Description of Drawings

FIG. 1 is a view illustrating a schematic configuration of a distance measurement sensor applied with an imaging lens according to one embodiment of the present disclosure.

FIG. 2 is a configuration diagram of an imaging lens in Example 1 of the present disclosure.

FIG. 3 is an aberration diagram of the imaging lens illustrated in FIG. 2.

FIG. 4 is a graph showing a relative light amount with respect to an image height of the imaging lens illustrated in FIG. 2.

FIG. 5 is a configuration diagram of an imaging lens in Example 2 of the present disclosure.

FIG. 6 is an aberration diagram of the imaging lens illustrated in FIG. 5.

FIG. 7 is a graph showing a relative light amount with respect to an image height of the imaging lens illustrated in FIG. 5.

FIG. 8 is a configuration diagram of an imaging lens in Example 3 of the present disclosure.

FIG. 9 is an aberration diagram of the imaging lens illustrated in FIG. 8.

FIG. 10 is a graph showing a relative light amount with respect to an image height of the imaging lens illustrated in FIG. 8.

FIG. 11 is a configuration diagram of an imaging lens in Example 4 of the present disclosure.

FIG. 12 is an aberration diagram of the imaging lens illustrated in FIG. 11.

FIG. 13 is a graph showing a relative light amount with respect to an image height of the imaging lens illustrated in FIG. 11.

FIG. 14 is a configuration diagram of an imaging lens in Example 5 of the present disclosure.

FIG. 15 is an aberration diagram of the imaging lens illustrated in FIG. 14.

FIG. 16 is a graph showing a relative light amount with respect to an image height of the imaging lens illustrated in FIG. 14.

FIG. 17 is a configuration diagram of an imaging lens in Example 6 of the present disclosure.

FIG. 18 is an aberration diagram of the imaging lens illustrated in FIG. 17.

FIG. 19 is a graph showing a relative light amount with respect to an image height of the imaging lens illustrated in FIG. 17.

Description of Embodiments

Hereinafter, one embodiment will be described with reference to the drawings. Note that the same or corresponding elements are denoted by the same reference signs throughout all the drawings, and redundant detailed description will be omitted. Hereinafter, an aspect in which an imaging device applied with the imaging lens of the present disclosure constitutes a distance measurement sensor will be exemplified.

Exemplification of Distance Measurement Sensor Applied with Imaging Lens

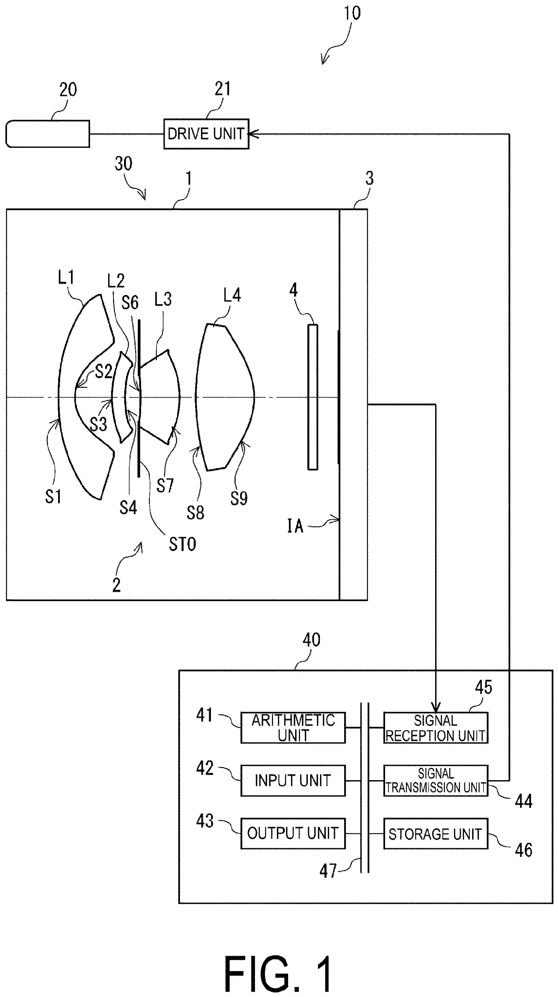

FIG. 1 is a view illustrating a schematic configuration of a distance measurement sensor applied with an imaging lens according to one embodiment of the present disclosure. As illustrated in FIG. 1, a distance measurement sensor 10 includes a light source 20, a light receiver 30, and a controller 40. The light source 20 is a laser diode or a light emitting diode that emits near-infrared light, for example. The wavelength emitted by the light source 20 is set within a range in which, for example, the lower limit value is 700 nm, preferably 800 nm, and the upper limit value is 1100 nm, preferably 1000 nm. The light source 20 is connected to the controller 40 via a drive unit (driver) 21. The drive unit 21 causes the light source 20 to emit light in response to a drive signal from the controller 40.

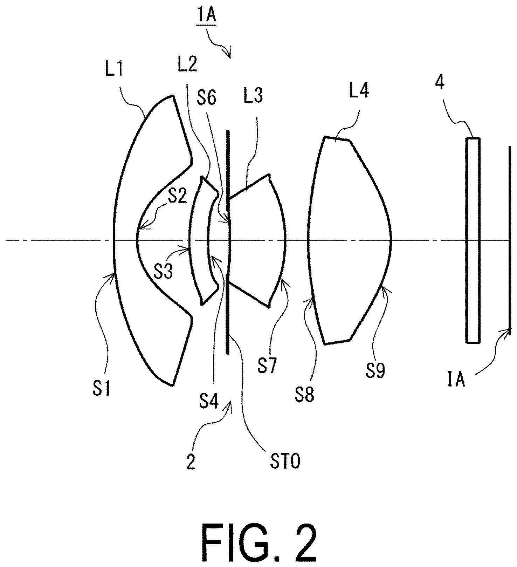

The light receiver 30 includes an imaging lens 1 including a lens system 2 described later, and an imaging element 3 including a plurality of light receiving elements arranged on an imaging surface IA of the imaging lens 1. Note that the imaging lens 1 illustrated in FIG. 1 is the same as an imaging lens 1A of Example 1 described later together with FIG. 2. The plurality of light receiving elements constituting the imaging element 3 include photodiodes, for example. For example, the imaging element 3 is a charge coupled device (CCD) sensor, a complementary metal oxide semiconductor (CMOS) sensor, or the like.

The controller 40 includes an arithmetic unit 41, an input unit 42, an output unit 43, a signal transmission unit 44, a signal reception unit 45, and a storage unit 46. These components are configured to be able to transmit signals to one another via a bus 47. The controller 40 is configured as a computer including a CPU, a main memory (RAM), a storage, and a communication interface. Therefore, each of the above-described components 41, 42, ..., and 46 can be regarded as a processing circuit.

The input unit 42 receives a control signal from the outside. For example, when the distance measurement sensor 10 is mounted on a communication terminal such as a smartphone, the input unit 42 receives, as a control signal, a distance measurement start signal from a higher-level processor in the communication terminal. When the input unit 42 receives the control signal, the signal transmission unit 44 outputs a drive signal for lighting the light source 20. The light receiver 30 receives (images) reflected light in which light emitted from the light source 20 is reflected by the subject. The imaging element 3 (light receiving element) converts reflected light received through the imaging lens 1 into an electric signal (imaging signal), and transmits the electric signal to the controller 40. The signal reception unit 45 receives the imaging signal from the light receiver 30.

The arithmetic unit 41 measures the time from when the light emitted by the light source 20 is emitted to when the light is received by the imaging element 3, calculates the distance between the distance measurement sensor 10 and the subject from the time and the light speed, and generates distance measurement data. By calculating the distance for each light receiving element (pixel) constituting the imaging element 3, the arithmetic unit 41 can output the distance measurement data as image data. The output unit 43 outputs the distance measurement data calculated by the arithmetic unit 41 to the outside. For example, when mounted on the communication terminal as described above, the distance measurement sensor 10 outputs the distance measurement data to the higher-level processor in the communication terminal.

Overview of Imaging Lens

The imaging lens 1 according to the present embodiment includes the lens system 2 in which a first lens L1, a second lens L2, a diaphragm STO, a third lens L3, and a fourth lens L4 are arranged in order from an object side. FIG. 1 illustrates respective lens surfaces of the lens system 2 as S1, ..., S4, S6, ..., and S9 in order from the object side. For example, the lens surface S1 means a lens surface on the object side of the first lens L1, and the lens surface S2 means a lens surface on the image side of the first lens L1.

Note that, in the imaging lens 1 illustrated in FIG. 1, the lens surface S2 on the image side of the first lens L1 is a concave surface, the lens surface S3 on the object side of the second lens L2 is a convex surface, and the lens surface S9 on the image side of the fourth lens L4 is a convex surface. A bandpass filter 4 for transmitting near-infrared light is provided between the fourth lens L4 and the imaging surface IA (imaging element 3). Note that the bandpass filter 4 need not be provided. An optical member such as a sealing glass for protecting the imaging element 3 may be arranged at the position of the bandpass filter 4.

With the configuration of the lens system 2, the angle of an off-axis light ray largely bent by the first lens L1 having negative refractive power can be guided to the imaging surface IA at a gentle angle by the positive lenses of the second lens L2 and subsequent lenses. By arranging the position of the diaphragm STO between the second lens L2 and the third lens L3, it is possible to minimize the cut amount of the off-axis light ray while reducing the front lens diameter, and thus it is easy to secure the peripheral light amount.

In the present embodiment, the lens system 2 satisfies the following Conditional Expressions (1) and (2).

$$-3 < f1/f < -1.15 \cdots (1)$$

$$2.4 < TTL/ImgH < 5 \cdots (2)$$

where f1 is the focal length of the first lens L1, f is the focal length of the lens system 2, TTL is the total length of the lens system 2, and ImgH is the maximum image height of the lens system 2.

The Conditional Expression (1) defines the relationship between the focal length f1 of the first lens L1 and the focal length f of the lens system 2. When the lower limit of the Conditional Expression (1) is exceeded, the negative refractive power of the first lens L1 becomes weak, and it is difficult to secure a wide angle of view with a short total length. When the upper limit of the Conditional Expression (1) is exceeded, on the other hand, the refractive power of the first lens becomes too strong, it is difficult to correct off-axis aberration, and good resolution performance cannot be obtained. The upper limit value of the Conditional Expression (1) is preferably -1.3, and the lower limit value of the Conditional Expression (1) is preferably -2.4.

The Conditional Expression (2) defines the relationship between the total length TTL and the maximum image height ImgH in the lens system 2. By satisfying the Conditional Expression (2), it is possible to realize an optical system that is small in size but has the aberration corrected well.

In the present embodiment, the lens system 2 can further satisfy the following Conditional Expression (3).

$$EPT/TTL < 0.3 \cdots (3)$$

where EPT is an entrance pupil position of the lens system 2.

The Conditional Expression (3) defines the relationship between the total length TTL and the entrance pupil position EPT in the lens system 2. By bringing the entrance pupil position EPT close to the object side in the lens system 2 having a wide angle of view, it is possible to reduce the light ray height of an off-axis light flux passing through the first lens L1. On the other hand, when the upper limit of the Conditional Expression (3) is exceeded, the entrance pupil position EPT is too close to the image surface side, and therefore it is difficult to reduce the front lens diameter. Note that the entrance pupil position EPT is defined by the distance from a surface top on the object side in the first lens L1.

In the present embodiment, the lens system 2 can further satisfy the following Conditional Expression (4).

$$0.05 < D1/f < 1 \cdots (4)$$

where D1 is a center thickness of the first lens L1.

The Conditional Expression (4) defines the relationship between the center thickness D1 and the focal length L1 in the first lens L1. When the upper limit of the Conditional Expression (4) is exceeded, the volume of the first lens L1 is large, and it is difficult to reduce the weight, and it is also difficult to reduce the front lens diameter. When the lower limit of the Conditional Expression (4) is exceeded, on the other hand, the center thickness of the first lens L1 is too thin, and thus the possibility of deformation or cracking due to impact increases. By satisfying the Conditional Expression (4), it is possible to prevent deformation or cracking due to impact while achieving weight reduction and size reduction of the first lens L1. Note that the upper limit value of the Conditional Expression (4) is preferably 0.5, and the lower limit value of the Conditional Expression (4) is preferably 0.1.

In the present embodiment, the lens system 2 can further satisfy the following Conditional Expression (5).

$$f/EPD < 2.0 \cdots (5)$$

where EPD is an entrance pupil diameter of the lens system 2.

The Conditional Expression (5) defines the relationship between the focal length f and the entrance pupil diameter EPD in the lens system 2, and is a conditional expression defining a so-called F-number. By satisfying the Conditional Expression (5), it is possible to secure a necessary light amount in a short exposure time even for an imaging element having a small size and a high definition.

In the present embodiment, the lens system 2 can further satisfy the following Conditional Expression (6).

$$f2/f < 40 \cdots (6)$$

where f2 is a focal length of the second lens L2.

The Conditional Expression (6) defines the relationship between the focal length f2 of the second lens L2 and the focal length f of the lens system 2. When the upper limit of the Conditional Expression (6) is exceeded, the refractive power of the second lens L2 is weak with respect to the positive refractive power necessary for increasing the diameter and shortening the total length, and it becomes necessary to increase the refractive power of the third lens L3 and the fourth lens L4. Therefore, performance deterioration due to eccentricity errors of the third lens L3 and the fourth lens L4 that are actually produced increases. On the other hand, by satisfying the Conditional Expression (6), it is possible to effectively divide the positive refractive power necessary for shortening the total length and to suppress an eccentricity error while achieving a large diameter. Note that the upper limit value of the Conditional Expression (6) is preferably 25.

In the present embodiment, the lens system 2 can further satisfy the following Conditional Expression (7).

$$1.5 < f3/f < 25 \cdots (7)$$

where f3 is a focal length of the third lens L3.

The Conditional Expression (7) defines the relationship between the focal length f3 of the third lens L3 and the focal length f of the lens system 2. By satisfying the Conditional Expression (7), it is possible to effectively allocate the positive refractive power necessary for shortening the total length to the third lens L3 while achieving a large diameter. The amount of aberration generated in the third lens L3 can be suppressed, and performance deterioration due to an eccentricity error can be suppressed.

Examples

Hereinafter, examples of the imaging lens 1 of the present disclosure will be described. Parameters used for each example are as follows. In lens data and tables of the specification data of the lens system, "degree" is used as the unit of angle, and "mm" is used as the unit of length. The calculation wavelength of the focal length is 940 nm.

f: focal length of the lens system 2
Fno: F-number (= f/Epd)
ω: half angle of view
ImgH: maximum image height
TTL: total optical length of the lens system 2 (distance on optical axis from the lens surface S1 on the object side of the first lens L1 to the imaging surface IA)
i: lens surface number (i = 1, ..., 4, 6, ..., 9)
Ri: radius of curvature on the i-th lens surface
Dik: center interval between the i-th lens surface Si and the k-th (k = i + 1) lens surface Sk
nd: refractive index with respect to a d line of the lens material
vd: Abbe number of the lens material

Note that the notation of 5 (STO) in the lens surface number indicates that a diaphragm surface STO is located between the lens surface S4 and the lens surface S6. The surface number of an object side surface of the bandpass filter 4 is 10, and the surface number of the image side surface of the bandpass filter 4 is 11. Note that "inf" in the radius of curvature indicates that the surface is a flat surface.

In each example, all the lens surfaces Si have an aspherical shape. Here, when a distance (sag amount) in the optical axis direction from a tangential plane of a surface vertex is X, a height from the optical axis is H, R is a radius of curvature, K is a conic constant, and Am is an m-th order aspherical coefficient, the aspherical shape is expressed by the following expression.

$$X = (H^2/R)/[1 + \{1 - (1 + K)H^2/R^2\}^{1/2}] + \Sigma Am \cdot H^m$$

Therefore, in the following, the value of Am in the aspheric expression described above is indicated, and the aspherical shape is specified. In the table of aspherical data, "E $\pm$ n" (n: natural number) of the numerical value of the aspherical coefficient is an exponential expression with a base of 10. That is, "E $\pm$ n" means "$\times$ 10$^{\pm n}$".

Example 1

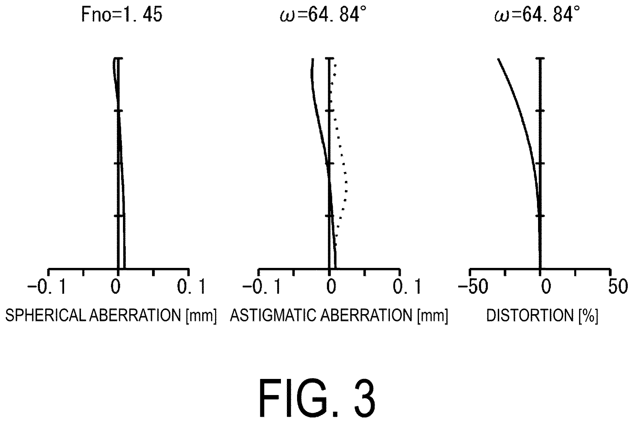

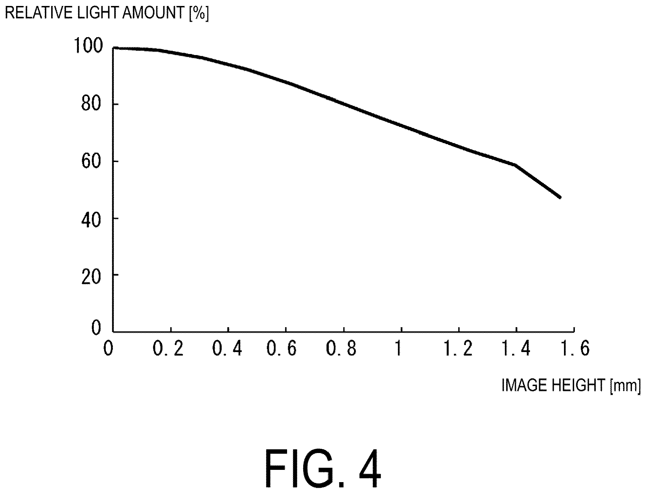

FIG. 2 is a configuration diagram of the imaging lens 1A in Example 1 of the present disclosure. FIG. 3 is an aberration diagram of the imaging lens 1A illustrated in FIG. 2 at a wavelength of 940 nm. FIG. 4 is a graph showing a relative light amount with respect to the image height of the imaging lens 1A illustrated in FIG. 2. The relative light amount indicates a ratio of the light amount at the image height position when the light amount at the optical axis position on the imaging surface IA is 100%.

The imaging lens 1A of Example 1 includes the lens system 2 in which the first lens L1 having negative refractive power with the convex surface facing the object side and the concave surface facing the image side, the second lens L2 having positive refractive power with the convex surface facing the object side and the concave surface facing the image side, the aperture diaphragm STO, the third lens L3 having positive refractive power with the concave surface facing the object side and the convex surface facing the image side, and the fourth lens L4 having positive refractive power with the convex surface facing the object side and the convex surface facing the image side are arranged in order from the object side.

Table 1 shows lens data of the imaging lens 1A of Example 1.

[Table 1]

| SURFACE NUMBER | R | D | Nd | Vd |
|---|---|---|---|---|
| 1 | 7.033 | 0.388 | 1.66059 | 20.40 |
| 2 | 0.997 | 0.864 | | |
| 3 | 2.470 | 0.312 | 1.66059 | 20.40 |
| 4 | 3.371 | 0.317 | | |
| 5(STO) | INF | 0.040 | | |
| 6 | -5.072 | 0.910 | 1.66059 | 20.40 |
| 7 | -2.273 | 0.381 | | |
| 8 | 4.182 | 1.365 | 1.66059 | 20.40 |
| 9 | -1.564 | 1.260 | | |
| 10 | INF | 0.210 | 1.51680 | 64.20 |
| 11 | INF | 0.500 | | |

The conic constant K and the aspherical coefficient Am in Example 1 are shown in Tables 2 and 3 below.

[Table 2]

| SURFACE NUMBER | K | A4 | A6 | A8 |
|---|---|---|---|---|
| 1 | -3.08309E+01 | 9.68074E-02 | -8.04353E-02 | 4.40911E-02 |
| 2 | -2.69524E+00 | 3.56317E-01 | -2.32950E-02 | -5.54566E-01 |
| 3 | -1.50138E+00 | -8.08127E-03 | -9.71243E-02 | 8.01357E-01 |
| 4 | -1.10046E+01 | 1.12796E-01 | 3.53787E-02 | 9.81990E-01 |
| 6 | -6.94187E-01 | -1.64567E-02 | 4.30784E-02 | 2.02103E-01 |
| 7 | -1.40107E+01 | -1.98056E-01 | 1.73374E-01 | -1.35550E-01 |
| 8 | -1.19450E+01 | -3.21049E-02 | 3.14093E-02 | -1.49381E-02 |
| 9 | -2.41515E-01 | 5.50034E-02 | -3.27688E-03 | 1.98217E-03 |

[Table 3]

| SURFACE NUMBER | A10 | A12 | A14 | A16 |
|---|---|---|---|---|
| 1 | -1.49316E-02 | 3.04272E-03 | -3.43532E-04 | 1.66436E-05 |
| 2 | 8.89953E-01 | -5.73720E-01 | 1.28243E-01 | 7.41217E-04 |
| 3 | -2.22734E+00 | 3.64517E+00 | -3.15545E+00 | 1.05084E+00 |
| 4 | -2.20017E+00 | 3.06831E+00 | 0.00000E+00 | 0.00000E+00 |
| 6 | 0.00000E+00 | 0.00000E+00 | 0.00000E+00 | 0.00000E+00 |
| 7 | 5.82042E-02 | 0.00000E+00 | 0.00000E+00 | 0.00000E+00 |
| 8 | 4.51403E-03 | -6.07514E-04 | 0.00000E+00 | 0.00000E+00 |
| 9 | 2.45168E-03 | -1.28115E-03 | 2.51167E-04 | 0.00000E+00 |

The focal length f, the F-number Fno, the half angle of view $\omega$, the maximum image height ImgH, and the total optical length TTL of the imaging lens 1A in Example 1 are shown in Table 4 below.

[Table 4]

|  | INF |
|---|---|
| f | 1.04 |
| Fno | 1.45 |
| $\omega$ | 64.844 |
| ImgH | 1.55 |
| TTL | 6.046 |

Example 2

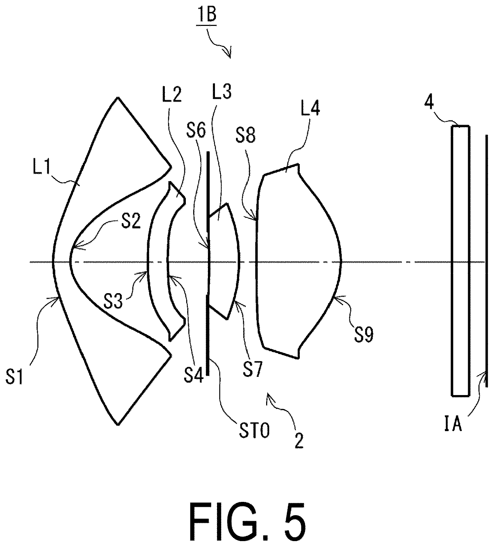

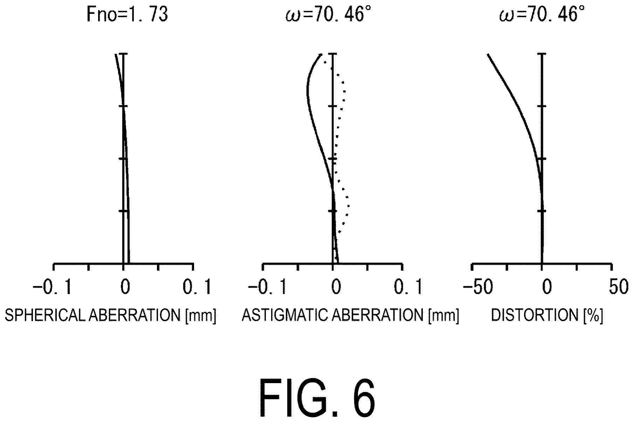

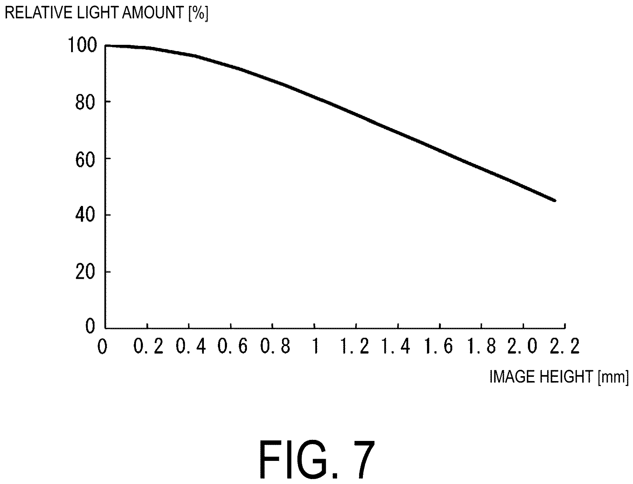

FIG. 5 is a configuration diagram of an imaging lens 1B in Example 2 of the present disclosure. FIG. 6 is an aberration diagram of the imaging lens 1B illustrated in FIG. 5. FIG. 7 is a graph showing a relative light amount with respect to the image height of the imaging lens 1B illustrated in FIG. 5. The relative light amount indicates a ratio of the light amount at the image height position when the light amount at the optical axis position on the imaging surface IA is 100%.

The imaging lens 1B of Example 2 includes the lens system 2 in which the first lens L1 having negative refractive power with the convex surface facing the object side and the concave surface facing the image side, the second lens L2 having positive refractive power with the convex surface facing the object side and the concave surface facing the image side, the aperture diaphragm STO, the third lens L3 having positive refractive power with the concave surface facing the object side and the convex surface facing the image side, and the fourth lens L4 having positive refractive power with the convex surface facing the object side and the convex surface facing the image side are arranged in order from the object side.

Table 5 shows lens data of the imaging lens 1B of Example 2.

[Table 5]

| SURFACE NUMBER | R | D | Nd | Vd |
|---|---|---|---|---|
| 1 | 1.474 | 0.300 | 1.57137 | 34.45 |
| 2 | 0.641 | 1.339 |  |  |
| 3 | 4.128 | 0.342 | 1.57137 | 34.45 |
| 4 | 6.237 | 0.693 |  |  |
| 5(STO) | INF | 0.030 |  |  |
| 6 | -10.902 | 0.516 | 1.57137 | 34.45 |
| 7 | -2.810 | 0.288 |  |  |
| 8 | 10.256 | 1.467 | 1.57137 | 34.45 |
| 9 | -1.429 | 1.925 |  |  |
| 10 | INF | 0.300 | 1.51680 | 64.20 |
| 11 | INF | 0.300 |  |  |

The conic constant K and the aspherical coefficient Am in Example 2 are shown in Tables 6 and 7 below.

[Table 6]

| SURFACE NUMBER | K | A4 | A6 | A8 |
|---|---|---|---|---|
| 1 | -2.63714E+00 | -6.71606E-02 | 3.67980E-02 | -1.21035E-02 |
| 2 | -1.16874E+00 | -1.07917E-02 | 2.00791E-01 | -3.83326E-01 |
| 3 | 5.54393E+00 | 3.86606E-02 | 8.25233E-02 | -3.67229E-02 |
| 4 | -9.78892E+00 | 9.54029E-02 | 1.37628E-01 | -4.46930E-02 |
| 6 | 2.00000E+01 | -3.41348E-02 | 1.91384E-02 | 8.17574E-03 |

(continued)

| SURFACE NUMBER | K | A4 | A6 | A8 |
|---|---|---|---|---|
| 7 | -5.22688E+00 | -9.36688E-02 | 5.85841E-02 | -2.17981E-02 |
| 8 | -1.17472E+01 | -6.10932E-02 | 4.86984E-02 | -2.10720E-02 |
| 9 | -3.65584E+00 | -1.02186E-01 | 6.26931E-02 | -4.04957E-02 |

[Table 7]

| SURFACE NUMBER | A10 | A12 | A14 | A16 |
|---|---|---|---|---|
| 1 | 2.40066E-03 | -2.77555E-04 | 1.72682E-05 | -4.44831E-07 |
| 2 | 4.65649E-01 | -2.84443E-01 | 7.95402E-02 | -8.24634E-03 |
| 3 | -1.65904E-02 | 5.71709E-02 | -5.51163E-02 | 1.47711E-02 |
| 4 | -2.67178E-02 | 5.59165E-02 | 0.00000E+00 | 0.00000E+00 |
| 6 | 0.00000E+00 | 0.00000E+00 | 0.00000E+00 | 0.00000E+00 |
| 7 | 1.24398E-02 | 0.00000E+00 | 0.00000E+00 | 0.00000E+00 |
| 8 | 1.01118E-02 | -2.00597E-03 | 0.00000E+00 | 0.00000E+00 |
| 9 | 2.04806E-02 | -6.18056E-03 | 9.51414E-04 | 0.00000E+00 |

The focal length f, the F-number Fno, the half angle of view $\omega$, the maximum image height ImgH, and the total optical length TTL of the imaging lens 1B in Example 2 are shown in Table 8 below.

[Table 8]

| | INF |
|---|---|
| f | 1.25 |
| Fno | 1.73 |
| $\omega$ | 70.46 |
| ImgH | 2.15 |
| TTL | 7.500 |

Example 3

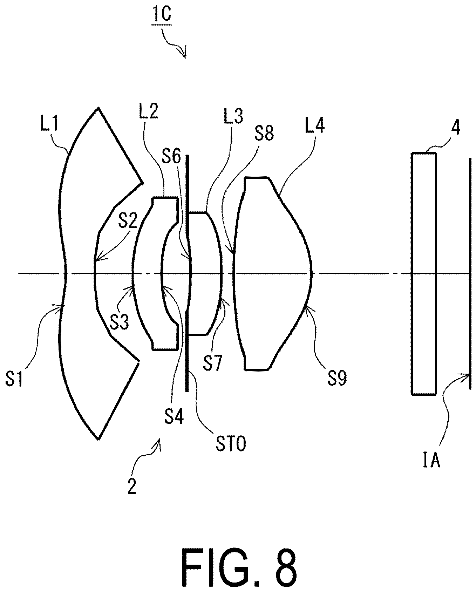

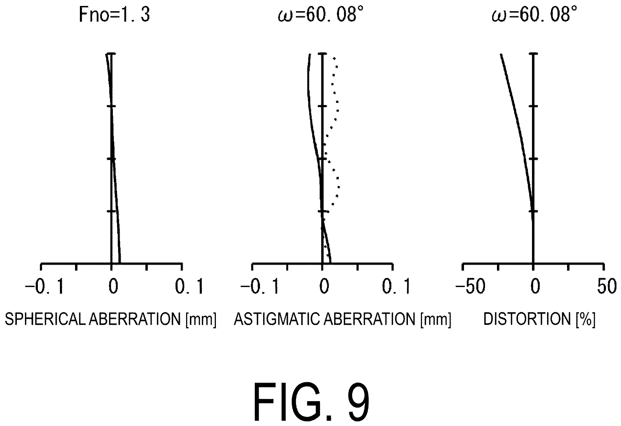

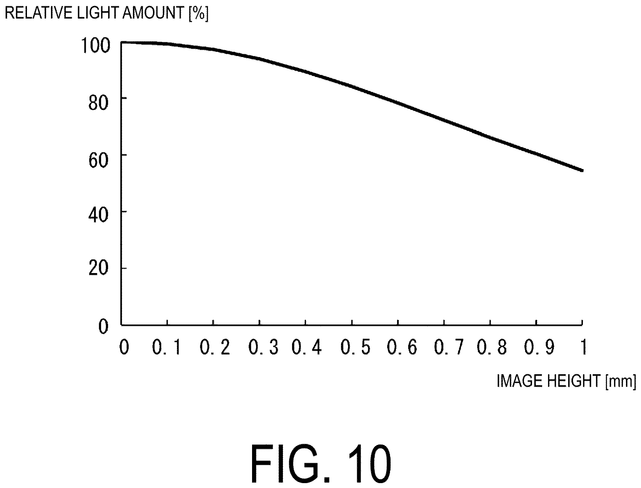

FIG. 8 is a configuration diagram of an imaging lens 1C in Example 3 of the present disclosure. FIG. 9 is an aberration diagram of the imaging lens 1C illustrated in FIG. 8. FIG. 10 is a graph showing a relative light amount with respect to the image height of the imaging lens 1C illustrated in FIG. 8. The relative light amount indicates a ratio of the light amount at the image height position when the light amount at the optical axis position on the imaging surface IA is 100%.

The imaging lens 1C of Example 3 includes the lens system 2 in which the first lens L1 having negative refractive power with the concave surface facing the object side and the concave surface facing the image side, the second lens L2 having positive refractive power with the convex surface facing the object side and the concave surface facing the image side, the aperture diaphragm STO, the third lens L3 having positive refractive power with the concave surface facing the object side and the convex surface facing the image side, and the fourth lens L4 having positive refractive power with the convex surface facing the object side and the convex surface facing the image side are arranged in order from the object side.

Table 9 shows lens data of the imaging lens 1C of Example 3.

[Table 9]

| SURFACE NUMBER | R | D | Nd | Vd |
|---|---|---|---|---|
| 1 | -0.842 | 0.250 | 1.57137 | 34.45 |
| 2 | 10.000 | 0.329 | | |

(continued)

| SURFACE NUMBER | R | D | Nd | Vd |
|---|---|---|---|---|
| 3 | 1.159 | 0.252 | 1.57137 | 34.45 |
| 4 | 1.357 | 0.219 | | |
| 5(STO) | INF | 0.030 | | |
| 6 | -2.519 | 0.270 | 1.57137 | 34.45 |
| 7 | -1.949 | 0.101 | | |
| 8 | 2.203 | 0.674 | 1.57137 | 34.45 |
| 9 | -0.707 | 0.869 | | |
| 10 | INF | 0.210 | 1.51680 | 64.20 |
| 11 | INF | 0.296 | | |

The conic constant K and the aspherical coefficient Am in Example 3 are shown in Tables 10 and Table 11 below.

[Table 10]

| SURFACE NUMBER | K | A4 | A6 | A8 |
|---|---|---|---|---|
| 1 | -1.60167E+01 | 7.43220E-01 | -1.40860E+00 | 1.79245E+00 |
| 2 | -2.00000E+01 | 3.03629E+00 | -1.21245E+01 | 5.05027E+01 |
| 3 | -7.98681E-01 | -3.47871E-03 | -1.56318E+00 | 1.87768E+01 |
| 4 | -4.32536E+00 | 4.49653E-01 | 7.34066E+00 | -6.49670E+01 |
| 6 | 7.45604E+00 | -5.31804E-01 | 2.20695E+00 | -3.01119E+00 |
| 7 | 2.60775E+00 | -1.15887E+00 | 4.71711E+00 | -9.03122E+00 |
| 8 | -1.97974E+01 | -6.88623E-01 | 3.87121E+00 | -8.91912E+00 |
| 9 | -5.05752E-01 | 2.30409E-01 | 1.32865E-01 | -2.26758E-01 |

[Table 11]

| SURFACE NUMBER | A10 | A12 | A14 | A16 |
|---|---|---|---|---|
| 1 | -1.41987E+00 | 6.73689E-01 | -1.74640E-01 | 1.89988E-02 |
| 2 | -1.74118E+02 | 4.10673E+02 | -5.24164E+02 | 2.62222E+02 |
| 3 | -9.60856E+01 | 4.53710E+02 | -1.20593E+03 | 1.10059E+03 |
| 4 | 5.91824E+02 | -1.39429E+03 | 0.00000E+00 | 0.00000E+00 |
| 6 | 0.00000E+00 | 0.00000E+00 | 0.00000E+00 | 0.00000E+00 |
| 7 | -7.25981E+00 | 0.00000E+00 | 0.00000E+00 | 0.00000E+00 |
| 8 | 1.15094E+01 | -6.85302E+00 | 0.00000E+00 | 0.00000E+00 |
| 9 | 1.75182E+00 | 1.54352E+00 | -3.96617E+00 | 0.00000E+00 |

The focal length f, the F-number Fno, the half angle of view $\omega$, the maximum image height ImgH, and the total optical length TTL of the imaging lens 1C in Example 3 are shown in Table 12 below.

[Table 12]

| | INF |
|---|---|
| f | 0.75 |
| Fno | 1.7 |

(continued)

|  | INF |
|---|---|
| $\omega$ | 60.08 |
| ImgH | 1.00 |
| TTL | 3.500 |

Example 4

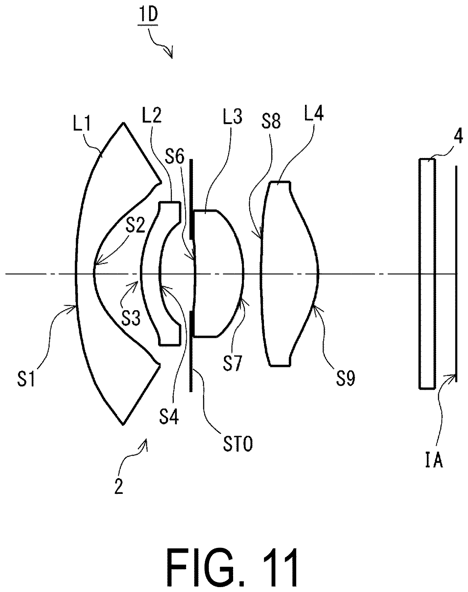

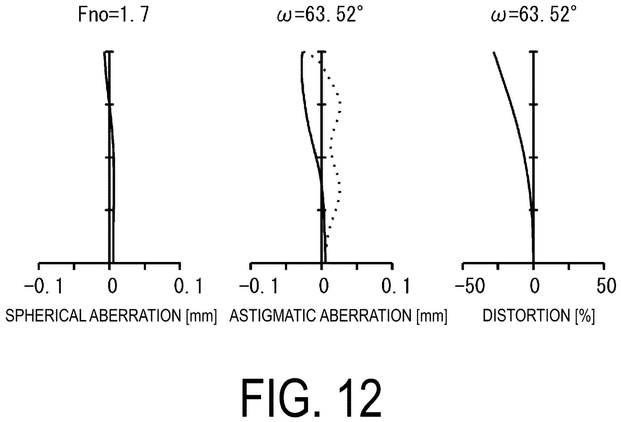

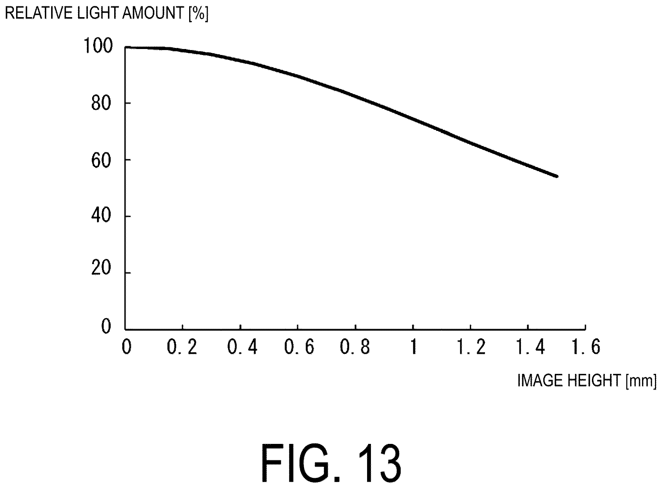

FIG. 11 is a configuration diagram of an imaging lens 1D in Example 4 of the present disclosure. FIG. 12 is an aberration diagram of the imaging lens 1D illustrated in FIG. 11. FIG. 13 is a graph showing a relative light amount with respect to the image height of the imaging lens 1D illustrated in FIG. 11. The relative light amount indicates a ratio of the light amount at the image height position when the light amount at the optical axis position on the imaging surface IA is 100%.

The imaging lens 1D of Example 4 includes the lens system 2 in which the first lens L1 having negative refractive power with the convex surface facing the object side and the concave surface facing the image side, the second lens L2 having positive refractive power with the convex surface facing the object side and the concave surface facing the image side, the aperture diaphragm STO, the third lens L3 having positive refractive power with the concave surface facing the object side and the convex surface facing the image side, and the fourth lens L4 having positive refractive power with the convex surface facing the object side and the convex surface facing the image side are arranged in order from the object side.

Table 13 shows lens data of the imaging lens 1D of Example 4.

[Table 13]

| SURFACE NUMBER | R | D | Nd | Vd |
|---|---|---|---|---|
| 1 | 10.211 | 0.250 | 1.57137 | 34.45 |
| 2 | 0.859 | 0.657 |  |  |
| 3 | 1.436 | 0.261 | 1.57137 | 34.45 |
| 4 | 1.738 | 0.462 |  |  |
| 5(STO) | INF | 0.030 |  |  |
| 6 | -7.385 | 0.668 | 1.57137 | 34.45 |
| 7 | -1.517 | 0.250 |  |  |
| 8 | 10.732 | 0.792 | 1.57137 | 34.45 |
| 9 | -1.268 | 1.419 |  |  |
| 10 | INF | 0.210 | 1.51680 | 64.20 |
| 11 | INF | 0.300 |  |  |

The conic constant K and the aspherical coefficient Am in Example 4 are shown in Tables 14 and Table 15 below.

[Table 14]

| SURFACE NUMBER | K | A4 | A6 | A8 |
|---|---|---|---|---|
| 1 | 3.01265E+00 | 1.05305E-01 | -1.14957E-01 | 8.02930E-02 |
| 2 | -1.87912E+00 | 2.89411E-01 | 2.09407E-01 | -1.18845E+00 |
| 3 | -1.10080E+00 | -7.27559E-02 | 8.73449E-01 | -4.38090E+00 |
| 4 | 2.14647E+00 | 6.18633E-02 | 1.23319E+00 | -5.93236E+00 |
| 6 | 2.00000E+01 | -7.98742E-02 | -8.13337E-02 | 8.07873E-02 |
| 7 | -2.37293E+00 | -1.34650E-01 | -1.26172E-01 | 1.79885E-01 |
| 8 | 1.70095E+00 | -1.99780E-02 | 1.77766E-02 | 4.27258E-02 |

(continued)

| SURFACE NUMBER | K | A4 | A6 | A8 |
|---|---|---|---|---|
| 9 | -4.75291E+00 | -1.73905E-01 | 2.29808E-01 | -2.20150E-01 |

[Table 15]

| SURFACE NUMBER | A10 | A12 | A14 | A16 |
|---|---|---|---|---|
| 1 | -3.29549E-02 | 7.86621E-03 | -9.97361E-04 | 5.12817E-05 |
| 2 | 1.62504E+00 | -7.86229E-01 | -6.06756E-02 | 9.83091E-02 |
| 3 | 1.15703E+01 | -1.54388E+01 | 9.38491E+00 | -2.01749E+00 |
| 4 | 1.75272E+01 | -1.59887E+01 | 0.00000E+00 | 0.00000E+00 |
| 6 | 0.00000E+00 | 0.00000E+00 | 0.00000E+00 | 0.00000E+00 |
| 7 | -2.29841E-01 | 0.00000E+00 | 0.00000E+00 | 0.00000E+00 |
| 8 | -4.20990E-02 | 1.11347E-02 | 0.00000E+00 | 0.00000E+00 |
| 9 | 1.92050E-01 | -9.11244E-02 | 1.66450E-02 | 0.00000E+00 |

The focal length f, the F-number Fno, the half angle of view $\omega$, the maximum image height ImgH, and the total optical length TTL of the imaging lens 1D in Example 4 are shown in Table 16 below.

[Table 16]

| | INF |
|---|---|
| f | 1.04 |
| Fno | 1.7 |
| $\omega$ | 63.52 |
| ImgH | 1.50 |
| TTL | 5.300 |

Example 5

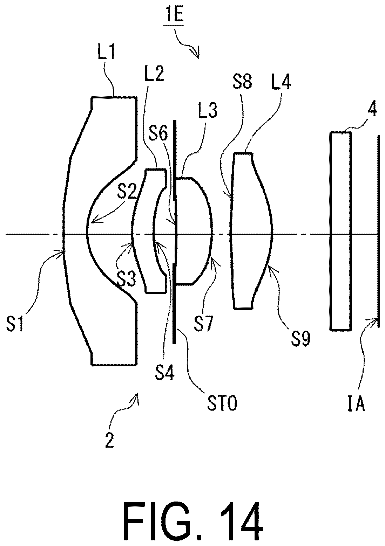

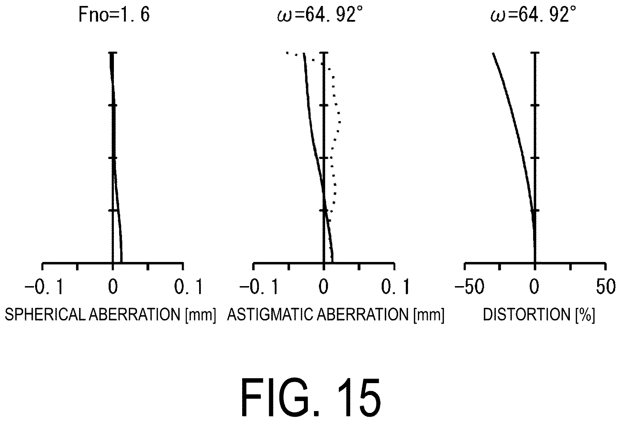

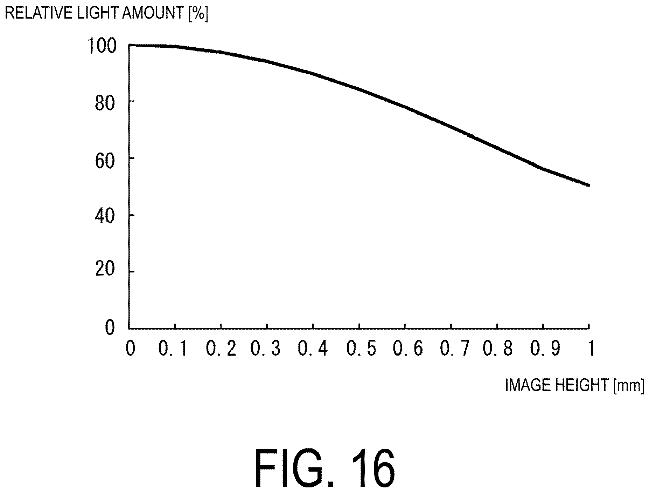

FIG. 14 is a configuration diagram of an imaging lens 1E in Example 5 of the present disclosure. FIG. 15 is an aberration diagram of the imaging lens 1E illustrated in FIG. 14 at a wavelength of 940 nm. FIG. 16 is a graph showing a relative light amount with respect to the image height of the imaging lens 1E illustrated in FIG. 14. The relative light amount indicates a ratio of the light amount at the image height position when the light amount at the optical axis position on the imaging surface IA is 100%.

The imaging lens 1E of Example 5 includes the lens system 2 in which the first lens L1 having negative refractive power with the convex surface facing the object side and the concave surface facing the image side, the second lens L2 having positive refractive power with the convex surface facing the object side and the concave surface facing the image side, the aperture diaphragm STO, the third lens L3 having positive refractive power with the convex surface facing the object side and the convex surface facing the image side, and the fourth lens L4 having positive refractive power with the convex surface facing the object side and the convex surface facing the image side are arranged in order from the object side.

Table 17 shows lens data of the imaging lens 1E of Example 5.

[Table 17]

| SURFACE NUMBER | R | D | Nd | Vd |
|---|---|---|---|---|
| 1 | 100.000 | 0.250 | 1.66059 | 20.40 |
| 2 | 0.656 | 0.470 | | |
| 3 | 0.867 | 0.224 | 1.66059 | 20.40 |

(continued)

| SURFACE NUMBER | R | D | Nd | Vd |
|---|---|---|---|---|
| 4 | 1.121 | 0.225 | | |
| 5(STO) | INF | 0.011 | | |
| 6 | 10.380 | 0.369 | 1.66059 | 20.40 |
| 7 | -1.458 | 0.199 | | |
| 8 | 3.183 | 0.429 | 1.66059 | 20.40 |
| 9 | -1.001 | 0.616 | | |
| 10 | INF | 0.210 | 1.51680 | 64.20 |
| 11 | INF | 0.296 | | |

The conic constant K and the aspherical coefficient Am in Example 5 are shown in Tables 18 and Table 19 below.

[Table 18]

| SURFACE NUMBER | K | A4 | A6 | A8 |
|---|---|---|---|---|
| 1 | -4.00000E+01 | 4.64179E-01 | -9.15678E-01 | 1.35985E+00 |
| 2 | -2.08902E+00 | 9.98106E-01 | 4.91374E+00 | -5.69409E+01 |
| 3 | -4.05908E+00 | 3.95699E-01 | -7.01625E+00 | 6.92098E+01 |
| 4 | -5.84598E+00 | 2.33944E-01 | 1.27020E+00 | -1.06492E+01 |
| 6 | -2.00000E+01 | -6.57160E-01 | -1.21227E+00 | 4.12656E+00 |
| 7 | 1.10939E+00 | -8.30555E-01 | -2.05438E-01 | -2.80532E-03 |
| 8 | -2.00000E+01 | -3.92794E-01 | 7.96204E-02 | 1.21305E+00 |
| 9 | -6.16881E-01 | 2.24258E-01 | -1.83851E-02 | -9.46812E-01 |

[Table 19]

| SURFACE NUMBER | A10 | A12 | A14 | A16 |
|---|---|---|---|---|
| 1 | -1.26742E+00 | 6.91427E-01 | -2.00847E-01 | 2.36342E-02 |
| 2 | 2.76178E+02 | -6.54998E+02 | 7.19682E+02 | -2.93483E+02 |
| 3 | -4.49373E+02 | 1.64843E+03 | -3.07399E+03 | 2.23699E+03 |
| 4 | 3.78890E+01 | 3.33816E+02 | 0.00000E+00 | 0.00000E+00 |
| 6 | 0.00000E+00 | 0.00000E+00 | 0.00000E+00 | 0.00000E+00 |
| 7 | -2.00228E+00 | 0.00000E+00 | 0.00000E+00 | 0.00000E+00 |
| 8 | -2.53944E-02 | -1.52441E+00 | 0.00000E+00 | 0.00000E+00 |
| 9 | 4.76303E+00 | -5.36020E+00 | 1.21010E+00 | 0.00000E+00 |

The focal length f, the F-number Fno, the half angle of view ω, the maximum image height ImgH, and the total optical length TTL of the imaging lens 1E in Example 5 are shown in Table 20 below.

[Table 20]

| | INF |
|---|---|
| f | 0.67 |
| Fno | 1.6 |
| ω | 64.92 |

(continued)

|  | INF |
| --- | --- |
| ImgH | 1.00 |
| TTL | 3.300 |

Example 6

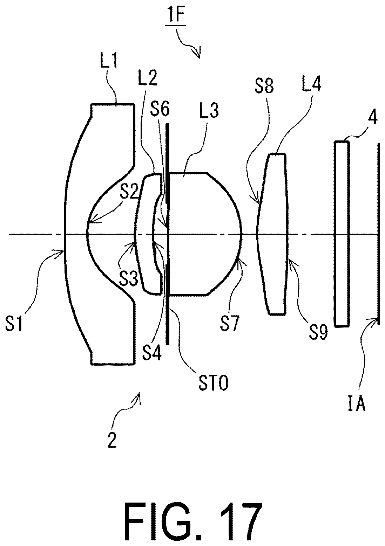

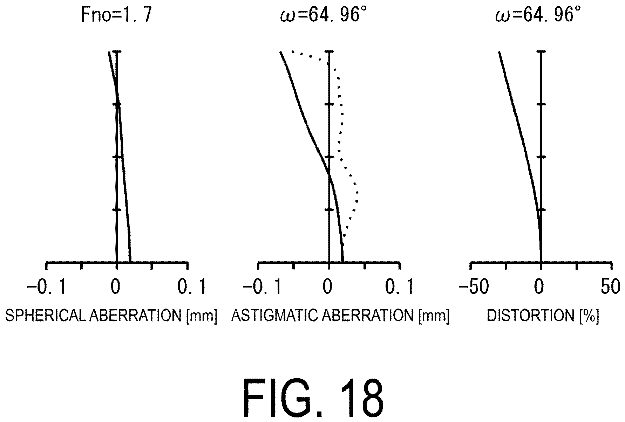

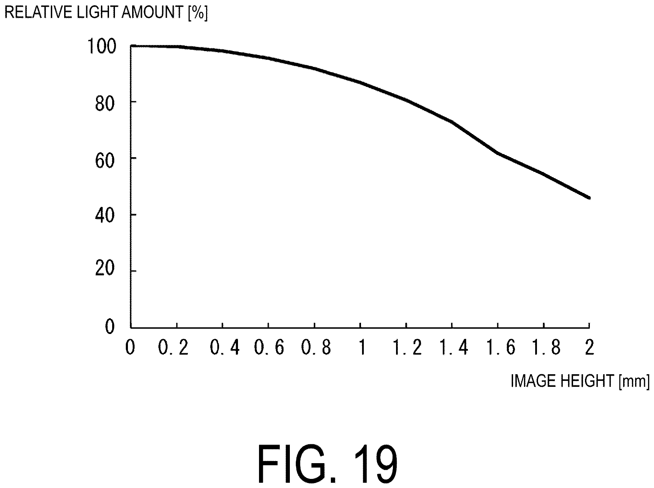

FIG. 17 is a configuration diagram of an imaging lens 1F in Example 1 of the present disclosure. FIG. 18 is an aberration diagram of the imaging lens 1F illustrated in FIG. 17 at a wavelength of 940 nm. FIG. 19 is a graph showing a relative light amount with respect to the image height of the imaging lens 1F illustrated in FIG. 17. The relative light amount indicates a ratio of the light amount at the image height position when the light amount at the optical axis position on the imaging surface IA is 100%.

The imaging lens 1F of Example 6 includes the lens system 2 in which the first lens L1 having negative refractive power with the convex surface facing the object side and the concave surface facing the image side, the second lens L2 having positive refractive power with the convex surface facing the object side and the concave surface facing the image side, the aperture diaphragm STO, the third lens L3 having positive refractive power with the convex surface facing the object side and the convex surface facing the image side, and the fourth lens L4 having positive refractive power with the convex surface facing the object side and the convex surface facing the image side are arranged in order from the object side.

Table 21 shows lens data of the imaging lens 1F of Example 6.

[Table 21]

| SURFACE NUMBER | R | D | Nd | Vd |
| --- | --- | --- | --- | --- |
| 1 | 199.500 | 0.499 | 1.57137 | 34.45 |
| 2 | 1.260 | 1.055 |  |  |
| 3 | 2.353 | 0.399 | 1.57137 | 34.45 |
| 4 | 3.105 | 0.331 |  |  |
| 5(STO) | INF | 0.000 |  |  |
| 6 | 9.999 | 1.609 | 1.57137 | 34.45 |
| 7 | -1.762 | 0.359 |  |  |
| 8 | 2.381 | 0.668 | 1.57137 | 34.45 |
| 9 | -99.750 | 1.054 |  |  |
| 10 | INF | 0.300 | 1.51680 | 64.20 |
| 11 | INF | 0.666 |  |  |

The conic constant K and the aspherical coefficient Am in Example 6 are shown in Tables 22 and Table 23 below.

[Table 22]

| SURFACE NUMBER | K | A4 | A6 | A8 |
| --- | --- | --- | --- | --- |
| 1 | 4.00000E+01 | 4.93812E-02 | -2.10387E-02 | 6.93145E-03 |
| 2 | -1.95645E+00 | 1.33030E-01 | 9.83182E-02 | -2.70557E-01 |
| 3 | -6.12848E+00 | -2.38888E-02 | -1.07449E-01 | 3.92673E-01 |
| 4 | -5.82929E+00 | -4.57555E-02 | 1.72109E-01 | -4.51758E-01 |
| 6 | -2.00000E+01 | -6.01054E-02 | -3.54061E-02 | 8.10621E-02 |
| 7 | -1.25104E+00 | -1.47475E-01 | 9.98065E-02 | -6.43921E-02 |
| 8 | -1.10956E+01 | -3.87805E-02 | 2.30917E-02 | -1.65430E-02 |

(continued)

| SURFACE NUMBER | K | A4 | A6 | A8 |
|---|---|---|---|---|
| 9 | 2.00000E+01 | -9.54256E-03 | -1.55740E-02 | 1.68917E-02 |

[Table 23]

| SURFACE NUMBER | A10 | A12 | A14 | A16 |
|---|---|---|---|---|
| 1 | -1.49544E-03 | 1.94752E-04 | -1.36459E-05 | 3.81965E-07 |
| 2 | 3.21086E-01 | -1.93386E-01 | 5.30722E-02 | -5.25576E-03 |
| 3 | -8.85313E-01 | 1.11156E+00 | -6.74625E-01 | 1.54818E-01 |
| 4 | 8.61059E-01 | -3.11624E-01 | 0.00000E+00 | 0.00000E+00 |
| 6 | 0.00000E+00 | 0.00000E+00 | 0.00000E+00 | 0.00000E+00 |
| 7 | 1.62286E-02 | 0.00000E+00 | 0.00000E+00 | 0.00000E+00 |
| 8 | 6.61733E-03 | -8.75386E-04 | 0.00000E+00 | 0.00000E+00 |
| 9 | -9.05283E-03 | 2.94058E-03 | -3.80094E-04 | 0.00000E+00 |

The focal length f, the F-number Fno, the half angle of view $\omega$, the maximum image height ImgH, and the total optical length TTL of the imaging lens 1F in Example 6 are shown in Table 24 below.

[Table 24]

| | INF |
|---|---|
| f | 1.34 |
| Fno | 1.7 |
| $\omega$ | 64.96 |
| ImgH | 2.00 |
| TTL | 6.940 |

Table 25 shows corresponding values of the Conditional Expressions (1) to (7) in the lens systems of Examples 1 to 6. Tables 26 and 27 show numerical values related to the Conditional Expressions (1) to (7). As shown in Table 25, all of the Conditional Expressions (1) to (7) are satisfied in any of the examples.

[Table 25]

| | CONDITIONAL EXPRESSION (1) | CONDITIONAL EXPRESSION (2) | CONDITIONAL EXPRESSION (3) | CONDITIONAL EXPRESSION (4) | CONDITIONAL EXPRESSION (5) | CONDITIONAL EXPRESSION (6) | CONDITIONAL EXPRESSION (7) |
|---|---|---|---|---|---|---|---|
| Example 1 | -1.809 | 3.901 | 0.179 | 0.373 | 1.45 | 12.372 | 5.547 |
| Example 2 | -1.868 | 3.488 | 0.202 | 0.240 | 1.73 | 16.557 | 5.311 |
| Example 3 | -1.843 | 3.500 | 0.161 | 0.333 | 1.70 | 13.052 | 17.620 |
| Example 4 | -1.633 | 3.533 | 0.177 | 0.240 | 1.70 | 10.888 | 3.163 |
| Example 5 | -1.555 | 3.300 | 0.194 | 0.373 | 1.60 | 6.708 | 3.044 |
| Example 6 | -1.704 | 3.470 | 0.187 | 0.373 | 1.70 | 10.953 | 2.114 |

[Table 26]

|  | f | f1 | f2 | f3 | f4 |
|---|---|---|---|---|---|
| Example 1 | 1.039 | -1.878 | 12.850 | 5.761 | 1.976 |
| Example 2 | 1.250 | -2.335 | 20.696 | 6.638 | 2.355 |
| Example 3 | 0.750 | -1.382 | 9.789 | 13.215 | 1.017 |
| Example 4 | 1.040 | -1.698 | 11.324 | 3.290 | 2.084 |
| Example 5 | 0.670 | -1.042 | 4.494 | 2.039 | 1.250 |
| Example 6 | 1.337 | -2.277 | 14.640 | 2.825 | 4.181 |

[Table 27]

|  | TTL | ImgH | EPT | EPD | D1 |
|---|---|---|---|---|---|
| Example 1 | 6.046 | 1.550 | 1.080 | 0.716 | 0.388 |
| Example 2 | 7.500 | 2.150 | 1.513 | 0.723 | 0.300 |
| Example 3 | 3.500 | 1.000 | 0.563 | 0.441 | 0.250 |
| Example 4 | 5.300 | 1.500 | 0.937 | 0.612 | 0.250 |
| Example 5 | 3.300 | 1.000 | 0.642 | 0.419 | 0.250 |
| Example 6 | 6.940 | 2.000 | 1.299 | 0.787 | 0.499 |

As illustrated in the aberration diagrams (FIGS. 3, 6, 9, 12, 15, 18, and 19) of the respective examples, the lens system 2 in which the transmission light amount is secured and the aberration is corrected well can be realized in spite of having a wide angle of view of a half angle of view of 35 degrees or more. As shown in the graphs (FIGS. 4, 7, 10, 13, 16, and 19) of the peripheral light amount with respect to the image height of the imaging lens of the respective examples, the light amount (peripheral light amount) at the position where the image height is high can be secured up to near 50% of the light amount at the optical axis position in spite of having a wide angle of view.

Although the embodiments of the present disclosure have been described above, configurations, combinations thereof, and the like in each embodiment are merely examples, and addition, omission, substitution, and other changes of the configurations can be appropriately made without departing from the gist of the present disclosure. The present disclosure is not limited by the embodiments, but is limited only by the claims.

Summary of Present Disclosure

Each of the following items is a disclosure of a preferred embodiment of the present disclosure.

Item 1

An imaging lens including a lens system in which a first lens having negative refractive power with a concave surface facing an image side, a second lens having positive refractive power with a convex surface facing an object side, a diaphragm, a third lens having positive refractive power, and a fourth lens having positive refractive power with a convex surface facing an image side are arranged in order from the object side, in which the lens system satisfies conditional expressions of:

$$-3 < f1/f < -1.15 \cdots (1)$$

$$2.4 < TTL/ImgH < 5 \cdots (2)$$

where f1 is the focal length of the first lens, f is the focal length of the lens system, TTL is the total length of the lens system, and ImgH is the maximum image height of the lens system.

Item 2

The imaging lens according to item 1, in which the lens system satisfies a conditional expression of:

$$EPT/TTL < 0.3 \cdots (3)$$

where EPT is an entrance pupil position of the lens system.

Item 3

The imaging lens according to item 1 or 2, in which the lens system satisfies a conditional expression of:

$$0.05 < D1/f < 1 \cdots (4)$$

where D1 is a center thickness of the first lens.

Item 4

The imaging lens according to any one of items 1 to 3, in which the lens system satisfies a conditional expression of:

$$f/EPD < 2.0 \cdots (5)$$

where EPD is an entrance pupil diameter of the lens system.

Item 5

The imaging lens according to any one of items 1 to 4, in which the lens system satisfies a conditional expression of:

$$f2/f < 40 \cdots (6)$$

where f2 is a focal length of the second lens.

Item 6

The imaging lens according to any one of items 1 to 5, in which the lens system satisfies a conditional expression of:

$$1.5 < f3/f < 25 \cdots (7)$$

where f3 is a focal length of the third lens.

Item 7

An imaging device including the imaging lens according to any one of items 1 to 6.

Item 8

The imaging device according to item 7 including a light source that emits light, and a light receiving element that receives, through the imaging lens, reflected light in which light from the light source is reflected by a subject, in which the imaging device is configured as a distance measurement sensor that calculates a distance to the subject by measuring a time from when the light source emits light to when the reflected light is received.

Industrial Applicability

The present disclosure is useful for providing an imaging lens having a wide angle of view and a high peripheral light amount while having a small size and a high resolution, and an imaging device provided with the imaging lens. The imaging device applied with the imaging lens of the present disclosure is not limited to the distance measurement sensor exemplified in the above embodiment. For example, the present disclosure can also be applied to a camera for imaging that forms an image of visible light. The distance measurement sensor applied with the imaging lens of the present disclosure is, for example, a distance measurement sensor that receives reflected light of a light source that emits light of a single wavelength such as near-infrared light or visible light. The distance measurement sensor mounted with the imaging lens of the present disclosure is useful for providing, for example, an imaging assist function in an imaging camera such as background blurring and autofocus, an automatic drive technology of an automatic cleaner, an automobile, and the like, a face authentication technology, an AR space realization technology, and the like.

Reference Signs List

1, 1A, 1B, 1C, 1D, 1E, 1F Imaging lens
2 Lens system
3 Imaging element (light receiving element)
10 Distance measurement sensor (imaging device)
20 Light source
L1 First lens
L2 Second lens
L3 Third lens
L4 Fourth lens
STO Diaphragm

**Claims**

1. An imaging lens comprising:

   a lens system in which a first lens having negative refractive power with a concave surface facing an image side, a second lens having positive refractive power with a convex surface facing an object side, a diaphragm, a third lens having positive refractive power, and a fourth lens having positive refractive power with a convex surface facing an image side are arranged in order from the object side,
   wherein the lens system satisfies conditional expressions of:

$$-3 < f1/f < -1.15 \cdots (1)$$

$$2.4 < TTL/ImgH < 5 \cdots (2)$$

   where f1 is a focal length of the first lens, f is a focal length of the lens system, TTL is a total length of the lens system, and ImgH is a maximum image height of the lens system.

2. The imaging lens according to claim 1, wherein the lens system satisfies a conditional expression of:

$$EPT/TTL < 0.3 \cdots (3)$$

   where EPT is an entrance pupil position of the lens system.

3. The imaging lens according to claim 1 or 2, wherein the lens system satisfies a conditional expression of:

$$0.05 < D1/f < 1 \cdots (4)$$

where D1 is a center thickness of the first lens.

4. The imaging lens according to claim 1 or 2, wherein the lens system satisfies a conditional expression of:

$$f/EPD < 2.0 \cdots (5)$$

where EPD is an entrance pupil diameter of the lens system.

5. The imaging lens according to claim 1 or 2, wherein the lens system satisfies a conditional expression of:

$$f2/f < 40 \cdots (6)$$

where f2 is a focal length of the second lens.

6. The imaging lens according to claim 1 or 2, wherein the lens system satisfies a conditional expression of:

$$1.5 < f3/f < 25 \cdots (7)$$

where f3 is a focal length of the third lens.

7. An imaging device comprising the imaging lens according to claim 1 or 2.

8. The imaging device according to claim 7, comprising:

a light source configured to emit light; and
a light receiving element configured to receive, through the imaging lens, reflected light where light from the light source is reflected by a subject,
wherein the imaging device is configured as a distance measurement sensor that calculates a distance to the subject by measuring a time from when the light source emits light to when the reflected light is received.

FIG. 1

FIG. 2

Fno=1. 45          ω=64. 84°          ω=64. 84°

-0. 1    0    0. 1     -0. 1    0    0. 1     -50    0    50

SPHERICAL ABERRATION [mm]   ASTIGMATIC ABERRATION [mm]   DISTORTION [%]

# FIG. 3

RELATIVE LIGHT AMOUNT [%]

IMAGE HEIGHT [mm]

FIG. 4

FIG. 5

Fno=1. 73 ω=70. 46° ω=70. 46°

-0. 1  0  0. 1

SPHERICAL ABERRATION [mm]

-0. 1  0  0. 1

ASTIGMATIC ABERRATION [mm]

-50  0  50

DISTORTION [%]

# FIG. 6

RELATIVE LIGHT AMOUNT [%]

IMAGE HEIGHT [mm]

FIG. 7

FIG. 8

Fno=1.3　　　　　ω=60.08°　　　　ω=60.08°

-0.1　　0　　0.1　　　-0.1　　0　　0.1　　　-50　　0　　50

SPHERICAL ABERRATION [mm]　　ASTIGMATIC ABERRATION [mm]　　DISTORTION [%]

# FIG. 9

RELATIVE LIGHT AMOUNT [%]

FIG. 10

# FIG. 11

Fno=1.7  ω=63.52°  ω=63.52°

SPHERICAL ABERRATION [mm]  ASTIGMATIC ABERRATION [mm]  DISTORTION [%]

# FIG. 12

RELATIVE LIGHT AMOUNT [%]

IMAGE HEIGHT [mm]

FIG. 13

FIG. 14

Fno=1. 6          ω=64. 92°          ω=64. 92°

-0. 1    0    0. 1   -0. 1    0    0. 1   -50    0    50

SPHERICAL ABERRATION [mm]  ASTIGMATIC ABERRATION [mm]   DISTORTION [%]

# FIG. 15

RELATIVE LIGHT AMOUNT [%]

IMAGE HEIGHT [mm]

# FIG. 16

FIG. 17

Fno=1. 7          $\omega$=64. 96°          $\omega$=64. 96°

-0. 1    0    0. 1    -0. 1    0    0. 1    -50    0    50

SPHERICAL ABERRATION [mm]   ASTIGMATIC ABERRATION [mm]   DISTORTION [%]

# FIG. 18

RELATIVE LIGHT AMOUNT [%]

IMAGE HEIGHT [mm]

# FIG. 19

## INTERNATIONAL SEARCH REPORT

| International application No. |
| --- |
| **PCT/JP2023/018605** |

**A. CLASSIFICATION OF SUBJECT MATTER**

*G02B 13/04*(2006.01)i; *G02B 13/00*(2006.01)i; *G02B 13/18*(2006.01)i
FI: G02B13/04; G02B13/00; G02B13/18

According to International Patent Classification (IPC) or to both national classification and IPC

**B. FIELDS SEARCHED**

Minimum documentation searched (classification system followed by classification symbols)

G02B13/04; G02B13/00; G02B13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/114458 A1 (JIANGXI LIANCHUANG ELECTRONIC CO., LTD.) 17 June 2021 (2021-06-17) | 1-7 |
| | p. 1, line 6, first example | |
| Y | p. 1, line 6, first example | 8 |
| Y | JP 2021-124725 A (DENSO CORP) 30 August 2021 (2021-08-30) paragraphs [0018]-[0026], fig. 1 | 8 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **30 June 2023** | **01 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/018605**

| Patent document cited in search report | | | Publication date (day/month/year) | Patent family member(s) | | | Publication date (day/month/year) |
|---|---|---|---|---|---|---|---|
| WO | 2021/114458 | A1 | 17 June 2021 | EP | 3835844 | A1 embodiment 1, paragraph [0001] | |
| JP | 2021-124725 | A | 30 August 2021 | US | 2022/0365178 | A1 paragraphs [0042]-[0051], fig. 1 | |
| | | | | CN | 115039009 | A | |

**EP 4 535 059 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4797115 A
- JP 6047701 A